# EUROPÄISCHE PATENTSCHRIFT

(11) **EP 2 378 240 B1**
(45) Veröffentlichungstag und Bekanntmachung des Hinweises auf die Patenterteilung: **10.05.2017**
(21) Anmeldenummer: 11001835.5
(22) Anmeldetag: 04.03.2011
(51) Int. Cl.: G01B 5/012, G01B 13/00

(54) **Vorrichtung zur Vermessung von Objekten**
Device for measuring objects
Dispositif de mesure d'objets

(30) Priorität: 09.04.2010 DE 102010014328; 12.07.2010 DE 102010026892
(43) Veröffentlichungstag der Anmeldung: 19.10.2011
(73) Patentinhaber: Stotz Feinmesstechnik GmbH, 70839 Gerlingen (DE)
(72) Erfinder: Stamenkovic, Milan, Dr., 70469 Stuttgart (DE)
(74) Vertreter: Manitz Finsterwald Patentanwälte PartmbB

(56) Entgegenhaltungen:
- DE-A1- 2 007 614
- DE-A1- 2 938 226
- DE-A1- 3 420 139
- DE-A1- 3 627 651
- US-A1- 2007 126 314

## Beschreibung

Die vorliegende Erfindung betrifft eine Vorrichtung zur Vermessung von Objekten, insbesondere ein Koordinatenmessgerät, mit einem Tastkopf, der mittels eines Aktuators relativ zu einem zu vermessenden Objekt verfahrbar ist, um die Oberfläche des Objekts berührend anzutasten, wobei ein insbesondere länglicher Tastkörper, dessen vorderes Ende als Messspitze für einen Kontakt mit dem Objekt ausgebildet ist, an dem Tastkopf gelagert ist und Mittel vorgesehen sind, um die relative Position der Messspitze in Bezug auf den Tastkopf zu ermitteln.

Derartige Vorrichtungen werden insbesondere dazu eingesetzt, geometrische Kenngrößen von Werkstücken zu ermitteln. Als Messspitzen können insbesondere Tastkugeln vorgesehen sein. Bei den Tastköpfen üblicher Koordinatenmessgeräte können schaltende Systeme und messende Systeme unterschieden werden. Bei den schaltenden Systemen wird durch eine Antastung der Objektoberfläche mit dem Tastkörper ein elektrischer Kontakt im Tastkopf geöffnet oder geschlossen und dadurch die Berührung detektiert. Schaltende Systeme sind einfach und kostengünstig herzustellen. Allerdings kann ein Punkt nur einmal in eine Richtung angetastet werden. Für eine weitere Antastung muss der elektrische Kontakt wieder in seinen ursprünglichen Zustand versetzt, also der Tastkörper wieder in seine ursprüngliche Lage zurückgestellt werden, wodurch sich eine Zeitverzögerung ergibt. Die messenden Systeme weisen im Tastkopf ein separates 3D-Messsystem auf, mit welchem die Position der Messspitze relativ zu dem Tastkopf ermittelt werden kann. Insbesondere können kapazitive Sensoren oder Dehnungsmessstreifen vorgesehen sein. Die Messspitze kann somit während des Messvorgangs fortlaufend mit dem zu vermessenden Objekt in Kontakt bleiben. Dadurch ist ein kontinuierliches Messen möglich. Koordinatenmessgeräte mit messendem Tastkopf eignen sich daher insbesondere für "Scanning"-Anwendungen.

Tastköpfe für Objektvermessungsvorrichtungen der beschriebenen Art sind üblicherweise für eine Antastkraft von 0,08 N bis 1 N ausgelegt. Dadurch sind Messungen mit besonders kleinen Tastkugeln - z.B. mit Tastkugeln von weniger als 0,5 mm Durchmesser - und mit besonders dünnen Tastkörpern - z.B. mit Tastkörpern, die dünner als 0,3 mm sind - erschwert. Insbesondere kann sich durch eine Biegung des verwendeten Tastkörpers eine unerwünscht schlechte Wiederholgenauigkeit bei der Messung ergeben.

Die DE 29 38 226 A1 offenbart einen Messkopf für ein Koordinatenmessgerät, bei welchem ein Messeinsatzträger einschließlich eines Messeinsatzes mittels eines elastischen Lagers beweglich in einem Gehäuse gelagert ist.

Die DE 34 20 139 A1 offenbart einen Messkopf für eine Koordinatenmessmaschine, bei welchem eine Stößelstange mit einer Tastkugel beweglich in einer Druckkammer gelagert ist. Bei einer Auslenkung der Stößelstange infolge einer Werkstückberührung hebt ein Ventilteller von einer Kammeröffnung ab und ermöglicht einen Luftstrom aus der Druckkammer. Der entsprechende Druckabfall in der Druckkammer ist elektronisch detektierbar.

Ein Messkopf mit Stößelstange, Druckkammer und Ventilteller ist auch in der DE 36 27 651 A1 offenbart.

In der DE 20 07 614 A1 ist ein pneumatisch-mechanischer Feintaster offenbart, welcher eine mittels Blattfedern an einem Düsen-Trägerelement aufgehängte Prallplatte umfasst.

In der US 2007/0126314 A1 ist ein Tastsystem mit einem axial verschieblichen Tastkörper offenbart.

Eine Aufgabe der Erfindung besteht darin, eine verbesserte Vorrichtung zur antastenden Vermessung von Objekten bereitzustellen, welche insbesondere eine gesteigerte Messwiederholgenauigkeit bei relativ kleinen Antastkräften sicherstellt.

Die Lösung der Aufgabe erfolgt durch eine Vorrichtung mit den Merkmalen des Anspruchs 1.

Bei einer erfindungsgemäßen Vorrichtung ist der Tastkörper neigungsveränderlich an dem Tastkopf gelagert und es sind Mittel vorgesehen, durch welche eine Änderung der Neigung des Tastkörpers relativ zu dem Tastkopf oder umgekehrt über eine Messung eines Prüfparameters detektierbar ist. Der Tastkopf mit dem Tastkörper kann in an sich bekannter Weise mittels des Aktuators bewegt werden, um den Tastkörper mit dem zu vermessenden Objekt, z.B. einem Werkstück, in Kontakt zu bringen. Sobald die Messspitze des Tastkörpers mit dem Werkstück in Kontakt gerät, ergibt sich bei einer weiteren Bewegung des Aktuators eine Positionsänderung des Tastkörpers in seiner Lagerung und gegebenenfalls eine Verformung des Tastkörpers an sich. Eine derartige Bewegung des Tastkörpers oder von Teilen desselben kann detektiert werden, indem der Prüfparameter gemessen und entsprechend ausgewertet wird. Das heißt also die Bewegung des Tastkörpers wird nicht etwa auf direktem Weg detektiert, indem z.B. ein elektrischer Schalter durch den Tastkörper selbst geöffnet oder geschlossen wird, sondern es wird ein messtechnisch erfassbarer Prüfparameter überwacht, welcher mit der Lage des Tastkörpers in Zusammenhang steht. Die relative Lage des Tastkörpers innerhalb des Bewegungsspielraums kann dann über den Prüfparameter festgestellt werden.

Erfindungsgemäß umfassen die Mittel zum Detektieren einer Neigungsänderung wenigstens eine pneumatische Messdüse, welche in eine Ausnehmung des Tastkopfes mündet. Erfindungsgemäß wird die Positionsänderung des Tastkörpers relativ zum Tastkopf also nicht wie im Stand der Technik kapazitiv oder mittels Dehnungsmessstreifen erfasst, sondern mittels eines pneumatischen Messkopfes. D.h. die Position der Messspitze wird mit einem pneumatischen Längenmesssystem intern gemessen. Die Verwendung des pneumatischen Messprinzips ermöglicht durch die Regulierung des Versorgungsluftdruckes geringere Antastkräfte, insbesondere Antastkräfte von weniger als 0,01 N. Es können daher kleinere Tastkörper eingesetzt werden. Ferner tritt aufgrund des pneumatischen Messprinzips nur eine relativ geringe Verformung des - meist dünn ausgebildeten - Tastkörpers auf. Gegenüber gängigen Verfahren können so auch kleinere Werkstücke vermessen werden. Darüber hinaus zeichnet sich das pneumatische Verfahren durch eine hohe Stabilität und eine gute Wiederholgenauigkeit aus. Ein weiterer Vorteil der pneumatischen Messung besteht darin, dass das System im Wesentlichen wartungsfrei ist. Bei Verwendung einer pneumatischen Messdüse stellt der Luftdruck den Prüfparameter dar.

Weiterbildungen der Erfindung sind in den abhängigen Ansprüchen, der Beschreibung sowie den Zeichnungen angegeben.

Gemäß einer Ausführungsform ist der Prüfparameter ein Abstand des Tastkörpers von einem Bezugspunkt. Der Bezugspunkt kann dem Tastkopf zugeordnet sein, sich also z.B. an der Innenwand einer Aufnahme für den Tastkörper befinden. Bei einer Bewegung des Tastkörpers relativ zu dem ortsfesten Bezugspunkt ändert sich der Abstand und somit der Prüfparameter, was durch eine Auswerteeinrichtung festgestellt werden kann.

Gemäß einer weiteren Ausführungsform ist der Tastkörper in einer Aufnahme des Tastkopfs gelagert. Dadurch ist eine zuverlässige - bevorzugt in mehreren Richtungen bewegliche - Lagerung des Tastkörpers im Tastkopf möglich.

Die Vorrichtung kann insbesondere zur Messung des Abstands zwischen zwei Wandabschnitten des zu vermessenden Objekts ausgebildet sein. Demgemäß wird eine Änderung der Position der Messspitze relativ zu dem Tastkopf durch Messung des Prüfparameters festgestellt. Eine derartige Bewegung der Messspitze relativ zu dem Tastkopf bedeutet ein Anschlagen an einem Wandabschnitt des zu vermessenden Objekts. Danach kann mittels des Aktuators ein gegenüberliegender Wandabschnitt des Objekts angefahren werden, bis der Tastkörper an diesem Wandabschnitt anschlägt, was wieder über die Bewegung der Messspitze relativ zu dem Tastkopf festgestellt wird. Aus dem zurückgelegten Weg des Aktuators errechnet sich der Abstand zwischen den beiden gegenüberliegenden Wandabschnitten des Objekts. Die Auswertung der Messsignale und die Berechnung des Wandabstandes kann durch eine Steuereinrichtung mittels einer geeigneten Software erfolgen. Auf diese Weise ermöglicht die Erfindung insbesondere die zuverlässige und exakte Ermittlung von Wandabständen, um z.B. den Durchmesser und die Güte von Bohrungen zu bestimmen.

Gemäß einer Ausführungsform der Erfindung sind im Tastkopf Messeinrichtungen vorgesehen, welche dazu ausgebildet sind, die Position des Tastkörpers in wenigstens zwei unterschiedlichen, quer zu einer Längsachse des Tastkörpers verlaufenden Messebenen zu erfassen. Der Unterschied zwischen den Positionen in den jeweiligen Messebenen ist von der Neigung des Tastkörpers abhängig, sodass über die Positionsdaten in den beiden Messebenen eine Änderung der Neigung des Tastkörpers leicht detektierbar ist.

Der Tastkörper kann einen zylindrischen oder bevorzugt quaderförmigen Lagerabschnitt aufweisen, der mit Bewegungsspielraum in einer, insbesondere einseitig offenen, Ausnehmung des Tastkopfs aufgenommen ist. Insbesondere kann der Tastkörper von oben in die Ausnehmung eingesetzt sein. Gemäß einer besonders bevorzugten Ausführungsform weist der Lagerabschnitt einen quadratischen Querschnitt auf. Ein quaderförmiger Lagerabschnitt mit insbesondere quadratischem Querschnitt kann besonders einfach und kostengünstig gefertigt werden, da insbesondere kein Rundschleifvorgang erforderlich ist. Die Ausnehmung kann ebenfalls zylindrisch oder quaderförmig sein, sodass sich der Bewegungsspielraum aus dem Unterschied der Durchmesser des Lagerabschnitts und der Ausnehmung ergibt. Unter einer Ausnehmung im Sinne der Erfindung sind auch mehrseitig offene Vertiefungen oder rückspringende Abschnitte einer Wand des Tastkörpers zu verstehen, also z.B. auch eine Eckaussparung.

Gemäß einer Ausgestaltung sind in wenigstens einer, bevorzugt zwei quer zu einer Längsachse des Tastkörpers verlaufenden voneinander beabstandeten Messebenen jeweils zwei um die Längsachse zueinander versetzt angeordnete pneumatische Messdüsen vorgesehen. Auf diese Weise kann die zweidimensionale Position des Tastkörpers in der jeweiligen Messebene, also die X- und die Y-Koordinate, ermittelt werden. Durch pneumatische Messungen in zwei voneinander beabstandeten Messebenen kann die Neigung oder eine Neigungsänderung des Tastkörpers leicht ermittelt werden.

Gemäß einer weiteren Ausgestaltung sind wenigstens ein Paar, vorzugsweise zwei um die Längsachse zueinander versetzt angeordnete Paare, von einander gegenüberliegenden pneumatischen Messdüsen vorgesehen. Über das Verhältnis der Luftdrücke der beiden gegenüberliegenden Messdüsen kann eine bestimmte Position des Tastkörpers eingestellt werden. Umgekehrt ergibt sich die momentane Position des Tastkörpers aus dem Verhältnis der Luftdrücke. Bei dieser Ausgestaltung stellt also das Verhältnis der Luftdrücke den Prüfparameter dar.

Die Mittel zum Detektieren einer Neigungsänderung können auch wenigstens eine Anordnung aus einer in die Ausnehmung mündenden pneumatischen Messdüse und einem von einer Innenwand der Aufnahme vorspringenden Abstützelement umfassen. Das Abstützelement kann ein Widerlager für den Tastkörper bilden, sodass eine gegenüberliegende Messdüse eingespart werden kann.

Gemäß einer weiteren Ausführungsform der Erfindung ist einerseits in wenigstens zwei bezüglich einer Längsachse des Tastkörpers voneinander beabstandeten Messebenen wenigstens eine in eine Ausnehmung des Tastkopfes mündende pneumatische Messdüse vorgesehen und ist andererseits zwischen den beiden Messebenen ein von einer Innenwand der Ausnehmung vorspringendes Abstützelement vorgesehen. Der Tastkörper ist also nach Art einer Wippe gelagert, wobei die Neigung des Tastkörpers von dem Verhältnis der Kräfte abhängt, mit welchen der Tastkörper auf den jeweiligen Seiten des Abstützelements beaufschlagt ist. Dieses Kräfteverhältnis ergibt sich wiederum unmittelbar aus dem Verhältnis der Luftdrücke der jeweiligen Messdüsen.

Jeder Messdüse kann eine steuerbare Druckluftzufuhr zugeordnet sein. Die Antastkraft kann somit über den der jeweiligen Messdüse zugeführten Luftdruck gesteuert werden.

Weiterhin kann jeder Messdüse ein pneumatisch-elektrischer Wandler zugeordnet sein, welcher in Abhängigkeit von einem Luftdruck der Messdüse ein von der Position des Tastkörpers in der Ausnehmung abhängiges Messsignal erzeugt. Das elektrische Messsignal kann als Prüfparameter herangezogen und in vielfacher Weise weiterverarbeitet werden.

Bevorzugt ist eine elektronische Auswerteeinheit vorgesehen, welche anhand der erzeugten Messsignale die Position, insbesondere die Neigung, des Tastkörpers relativ zu dem Tastkopf, insbesondere kontinuierlich, ermittelt. Dies ermöglicht ein besonders schnelles Vermessen von Objekten, insbesondere auch in einem "Scanning"-Modus.

Gemäß einer weiteren Ausführungsform ist der Tastkörper während des Betriebs der Vermessungsvorrichtung auf einem Luftstrom schwebend in einer Aufnahme des Tastkopfs gelagert. Dadurch können aufwändige und fehleranfällige Gleit- oder Wälzlager eingespart werden. Zudem ist eine im Wesentlichen reibungsfreie Beweglichkeit des Tastkörpers in der Aufnahme gewährleistet.

Zur schwebenden Lagerung des Tastkörpers kann mindestens eine nach oben gerichtete Luftaustrittsdüse in der Aufnahme vorgesehen sein. Eine Luftaustrittsdüse zur Erzeugung eines Luftkissens zur Lagerung des Tastkörpers kann insbesondere im Boden der Aufnahme vorgesehen sein. Je nach Bedarf können auch mehrere nach oben gerichtete Luftaustrittsdüsen vorgesehen sein.

Die Luftaustrittsdüse kann als pneumatische Messdüse ausgebildet sein, welche dazu ausgebildet ist, die Höhe des schwebend gelagerten Tastkörpers in der Aufnahme zu ermitteln. Eine derartige Düse dient also sowohl zum Lagern des Tastkörpers auf einem Luftstrom als auch der Positionsbestimmung.

Im Folgenden wird die Erfindung beispielhaft unter Bezugnahme auf die Zeichnungen beschrieben.
- Fig. 1: ist eine vereinfachte Darstellung einer Objektvermessungsvorrichtung gemäß einer ersten Ausführungsform der Erfindung.
- Fig. 2: ist eine Draufsicht auf eine Objektvermessungsvorrichtung gemäß der Fig. 1.
- Fig. 3: ist eine Draufsicht auf eine Objektvermessungsvorrichtung gemäß einer zweiten Ausführungsform der Erfindung.
- Fig. 4: ist eine vereinfachte Darstellung einer Objektvermessungsvorrichtung gemäß einer dritten Ausführungsform der Erfindung.
- Fig. 5: ist eine Draufsicht auf eine Objektvermessungsvorrichtung gemäß der Fig. 4.
- Fig. 6: ist eine Draufsicht auf eine Objektvermessungsvorrichtung gemäß einer vierten Ausführungsform der Erfindung.
- Fig. 7: ist eine Draufsicht auf eine Objektvermessungsvorrichtung gemäß einer fünften Ausführungsform der Erfindung.

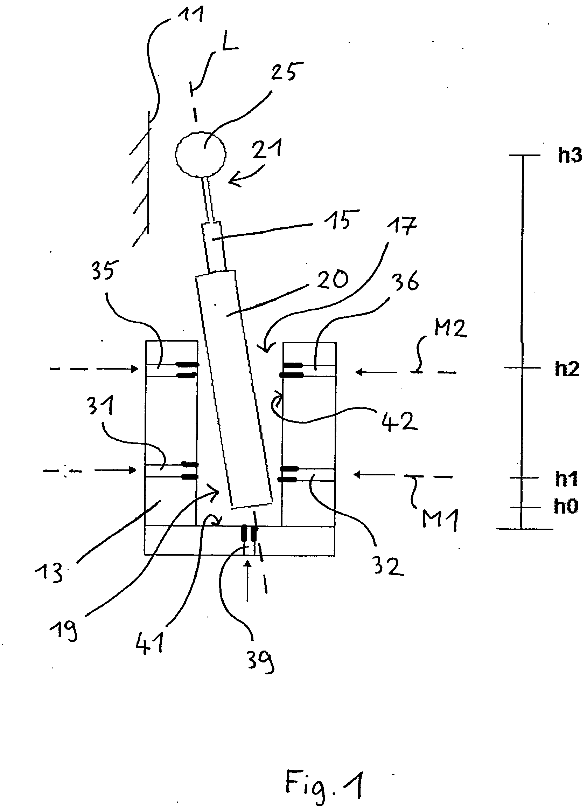

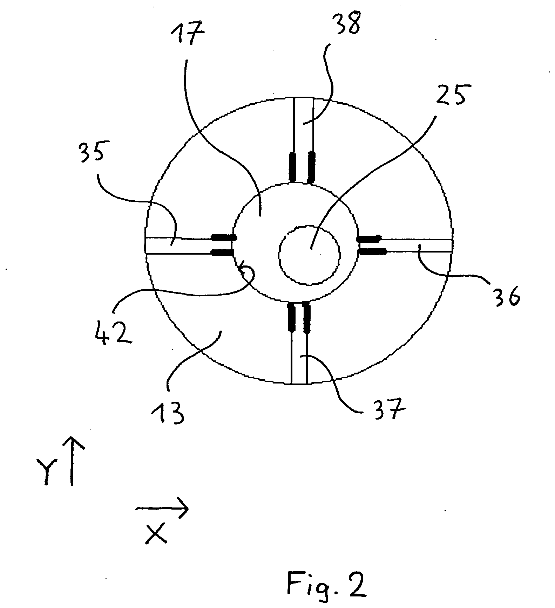

Fig. 1 und 2 zeigen eine erste Ausführungsform der Erfindung. Ein Koordinatenmessgerät zum Vermessen eines Werkstücks 11 umfasst einen Tastkopf 13 und einen nicht dargestellten Aktuator, mittels dem der Tastkopf 13 relativ zu dem Werkstück 11 verfahrbar ist. Bei dem Aktuator kann es sich um ein angetriebenes dreiachsiges Stellsystem wie einen 3D-Schlitten handeln.

Ein Tastkörper 15 mit einer Längsachse L ist von oben in eine einseitig offene Ausnehmung 17 des Tastkopfs 13 eingesetzt und mit Bewegungsspielraum in dieser gelagert. Die Ausnehmung 17 weist eine zylindrische Innenwand 42 und einen Boden 41 auf. An seinem hinteren oder unteren Ende 19 ist der Tastkörper 15 fest mit einem zylindrischen Lagerelement 20 verbunden, welches in die Ausnehmung 17 eingesetzt ist. An dem vorderen oder oberen Ende 21 des Tastkörpers 15 ist eine Tastkugel 25 vorgesehen, welche eine Messspitze für einen Kontakt mit dem Werkstück 11 bildet.

Der Tastkopf 13 ist mit pneumatischen Messdüsen 31-39 versehen, welche in das Innere der Ausnehmung 17 münden. Jede der Messdüsen 31-39 ist mit einem separaten pneumatisch-elektrischen Wandler (nicht dargestellt), z.B. gemäß DIN 2771, verbunden. Die pneumatisch-elektrischen Wandler liefern jeweilige Ausgangspannungen, die in einer ebenfalls nicht dargestellten Auswerteeinheit gleichzeitig ausgewertet werden. Jeder Messdüse 31-39 ist ferner eine nicht dargestellte steuerbare Druckluftzufuhr zugeordnet.

Vier Messdüsen 31-34 sind in einer ersten, quer zur Längsachse L des Tastkörpers 15 verlaufenden Messebene M1 angeordnet, wobei jeweils zwei einander gegenüberliegende Messdüsen ein Messdüsenpaar bilden und die beiden Messdüsenpaare innerhalb der Messebene M1 um 90° bezüglich der Längsachse L zueinander versetzt sind. In ähnlicher Weise sind in einer zweiten Messebene M2, welche parallel zu der ersten Messebene M1 verläuft und zu dieser in Richtung der Längsachse L beabstandet ist, zwei Messdüsenpaare aus einander gegenüberliegenden Messdüsen 35-38 angeordnet. Ferner ist eine nach oben gerichtete Messdüse 39 im Boden 41 der Ausnehmung 17 vorgesehen.

Mittels der pneumatischen Messdüsen 31-39 wird die relative Position des Tastkörpers 15 relativ zu dem Tastkopf 13 in der Messebene M1 und in der Messebene M2 gemessen. Speziell wird mit den Messdüsen 31, 32 die Position des Lagerelements 20 in einer X-Richtung auf der durch die Messebene M1 vorgegebenen Höhe h1 gemessen. Entsprechend wird die Position des Lagerelements 20 in einer Y-Richtung auf der Höhe h1 mittels der Messdüsen 33, 34 gemessen. In analoger Weise wird die Position des Lagerelements 20 auf der durch die Messebene M2 vorgegebenen Höhe h2 in X-Richtung und in Y-Richtung mittels der Messdüsen 35-38 gemessen. Die Messdüse 39 ermöglicht das schwebende Lagern des Tastkörpers 15 auf dem nach oben geblasenen Luftstrom. Zusätzlich wird mittels der Messdüse 39 die Höhenposition h0 des Tastkörpers 15 ermittelt, welche dem Abstand des Tastkörpers 15 vom Boden 41 der Ausnehmung 17 entspricht.

Durch Anpassung der Luftdruckverhältnisse in den Messdüsen 31-38 in den beiden Messebenen M1, M2 ist es möglich, die Neigung des Lagerelements 20 und somit des Tastkörpers 15 zu bestimmen und eine vorgegebene Vorspannung zu erzielen. Aus der Neigung des Tastkörpers 15 kann wiederum die dreidimensionale Position des Zentrums der Tastkugel 25 relativ zu dem Tastkopf 13 ermittelt werden. Dazu sind insbesondere die geometrischen Gegebenheiten des Tastkörpers 15, insbesondere des Lagerelements 20 und der Tastkugel 25, sowie die Betriebsparameter der Messdüsen 31-39 zu berücksichtigen. Über eine Neigungsänderung wird ein Antasten eines Messobjekts detektierbar.

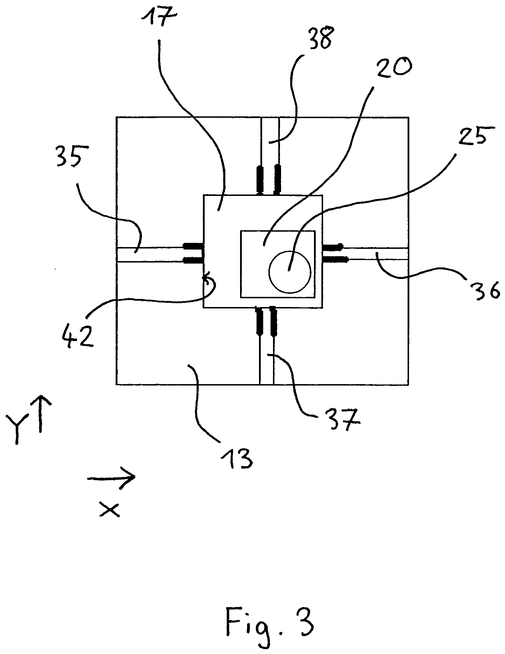

Fig. 3 zeigt eine Ausgestaltung der Erfindung, bei welcher sowohl das Lagerelement 20 als auch die Ausnehmung 17 einen quadratischen Querschnitt aufweisen. Dies ermöglicht insbesondere eine Verringerung der Herstellungskosten im Vergleich zu einer runden Ausgestaltung.

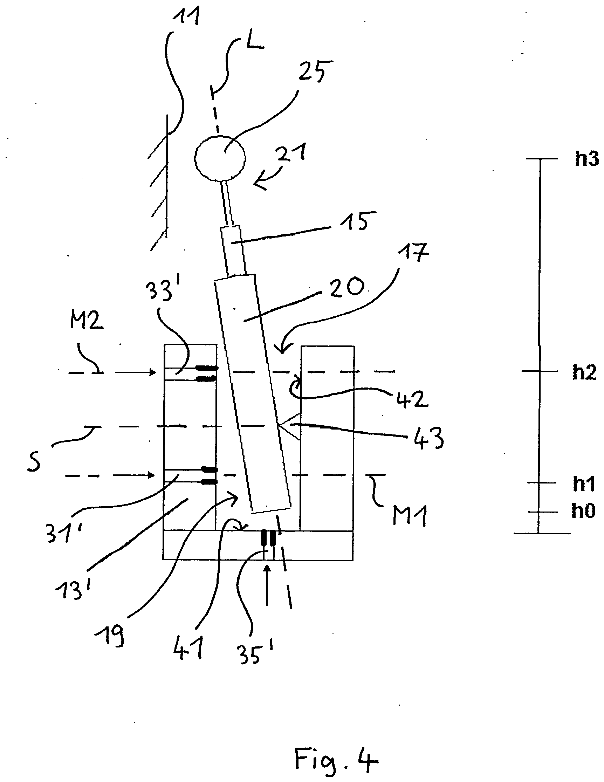

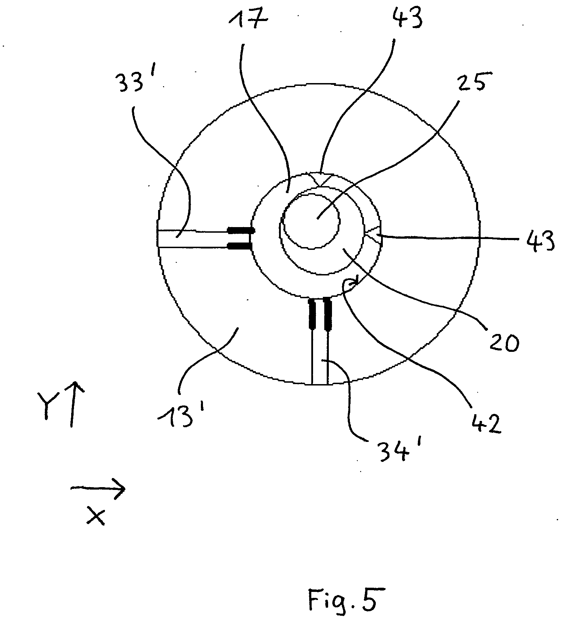

Alternativ zu den Ausführungsformen gemäß Fig. 1, 2 und 3 kann gemäß Fig. 4 und 5 ein Tastkopf 13' eingesetzt werden, in welchem lediglich 5 Messdüsen 31'-35' vorgesehen sind. Zwei von der Innenwand 42 der Ausnehmung 17 vorspringende Abstützelemente 43 sind in einer gemeinsamen Stützebene S vorgesehen, welche zwischen den Messebenen M1, M2 und parallel zu diesen angeordnet ist. Das hier wiederum zylindrische Lagerelement 20 liegt auf den Abstützelementen 43 auf und wird jeweils beiderseits des Auflagepunkts mit einem bestimmten Luftdruck beaufschlagt. Die Neigung des Lagerelements 20 steht in direktem Zusammenhang mit dem Verhältnis der Luftdrücke oberhalb und unterhalb der Stützebene S. Somit kann auch bei dieser Ausführungsform durch Anpassung der Luftdruckverhältnisse, also durch geeignete Steuerung des Versorgungsluftdrucks der einzelnen Messdüsen 31'-34', eine gewünschte Vorspannung oder eine gewünschte Antastkraft eingestellt werden. Außerdem kann aus den Luftdruckverhältnissen wieder die Neigung des Tastkörpers 15 ermittelt und damit ein Antasten an ein Messobjekt festgestellt werden.

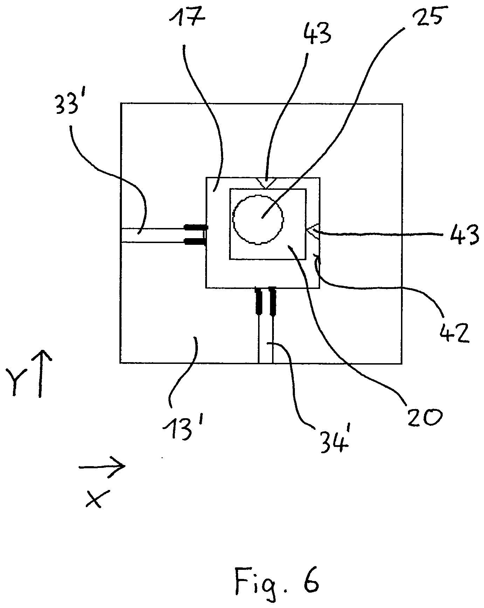

Fig. 6 zeigt eine Ausgestaltung, bei welcher analog zu der Ausführungsform gemäß Fig. 4 und 5 Abstützelemente 43 für das Lagerelement 20 vorgesehen sind. Wie bei der Ausführungsform gemäß Fig. 3 weisen hier sowohl das Lagerelement 20 als auch die Ausnehmung 17 einen quadratischen Querschnitt auf.

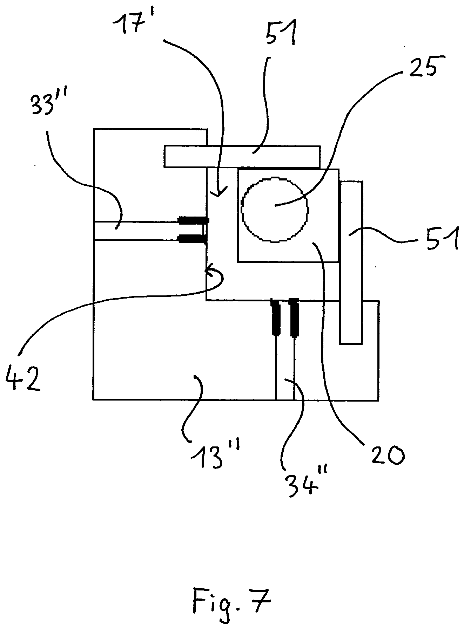

Gemäß der in Fig. 7 dargestellten Ausführungsform ist die Ausnehmung 17' als mehrseitig offene Eckaussparung in einem L-förmigen Tastkopf 13" ausgebildet. Das hier einen quadratischen Querschnitt aufweisende Lagerelement 20 wird von zwei Stützstäben 51 abgestützt, welche sich in horizontaler Richtung von der Innenwand 42 der Ausnehmung 17' erstrecken. Wie bei der Ausführungsform gemäß Fig. 4 und 5 wird das Lagerelement 20 beiderseits des Auflagepunkts mittels pneumatischer Messdüsen 31 "-34" mit einem gesteuerten Luftdruck beaufschlagt. Die Ausgestaltung gemäß Fig. 7 ermöglicht eine besonders einfache Konstruktion.

Insgesamt ermöglicht die Erfindung eine antastende Vermessung von Objekten mit besonders hoher Reproduzierbarkeit bei relativ kleinen Antastkräften.

### Bezugszeichenliste:

- 11: Werkstück
- 13, 13', 13": Tastkopf
- 15: Tastkörper
- 17, 17': Ausnehmung
- 19: unteres Ende
- 20: Lagerelement
- 21: oberes Ende
- 25: Tastkugel
- 31-39: pneumatische Messdüse
- 31'-35': pneumatische Messdüse
- 31"-35": pneumatische Messdüse
- 41: Boden
- 42: Innenwand
- 43: Abstützelement
- 51: Stützstab

- L: Längsachse
- M1: erste Messebene
- M2: zweite Messebene
- S: Stützebene

## Patentansprüche

1. Vorrichtung zur Vermessung von Objekten, insbesondere Koordinatenmessgerät, mit einem Aktuator und einem Tastkopf (13, 13', 13"), der mittels des Aktuators relativ zu einem zu vermessenden Objekt (11) verfahrbar ist, um die Oberfläche des Objekts (11) berührend anzutasten,
wobei ein insbesondere länglicher Tastkörper (15), dessen vorderes Ende (21) als Messspitze (25) für einen Kontakt mit dem Objekt (11) ausgebildet ist, an dem Tastkopf (13, 13', 13") gelagert ist und Mittel vorgesehen sind, um die relative Position der Messspitze (25) in Bezug auf den Tastkopf (13, 13', 13") zu ermitteln, wobei der Tastkörper (15) neigungsveränderlich an dem Tastkopf (13, 13', 13") gelagert ist und
Mittel (31-39, 31'-35', 31"-35") vorgesehen sind, durch welche eine Änderung der Neigung des Tastkörpers (15) relativ zu dem Tastkopf (13, 13', 13") oder umgekehrt über eine Messung eines Prüfparameters detektierbar ist,
**dadurch gekennzeichnet, dass**
die Mittel zum Detektieren einer Neigungsänderung wenigstens eine pneumatische Messdüse (31-39, 31'-35', 31"-35") umfassen, welche in eine Ausnehmung (17, 17') des Tastkopfes (13, 13', 13") mündet.

2. Vorrichtung nach Anspruch 1,
**dadurch gekennzeichnet, dass**
der Prüfparameter ein Abstand des Tastkörpers (15) von einem Bezugspunkt ist.

3. Vorrichtung nach Anspruch 1 oder 2,
**dadurchgekennzeichnet**, dass
der Tastkörper (15) in einer Aufnahme (17) des Tastkopfs (13, 13') gelagert ist.

4. Vorrichtung nach zumindest einem der vorstehenden Ansprüche,
**dadurch gekennzeichnet, dass**
im Tastkopf (13, 13', 13") Messeinrichtungen vorgesehen sind, welche dazu ausgebildet sind, die Position des Tastkörpers (15) in wenigstens einer, bevorzugt zwei unterschiedlichen, quer zu einer Längsachse (L) des Tastkörpers (15) verlaufenden Messebenen (M1, M2) zu erfassen, insbesondere kontinuierlich.

5. Vorrichtung nach zumindest einem der vorstehenden Ansprüche,
**dadurch gekennzeichnet, dass**
der Tastkörper (15) einen zylindrischen oder bevorzugt quaderförmigen Lagerabschnitt (20) aufweist, der mit Bewegungsspielraum in einer, insbesondere einseitig offenen, Ausnehmung (17, 17') des Tastkopfs (13, 13', 13") aufgenommen ist, wobei der Tastkörper (15) insbesondere von oben in die Ausnehmung (17, 17') eingesetzt ist.

6. Vorrichtung nach einem der vorstehenden Ansprüche,
**dadurch gekennzeichnet, dass**
in wenigstens einer, bevorzugt zwei quer zu einer Längsachse (L) des Tastkörpers (15) verlaufenden voneinander beabstandeten Messebenen (M1, M2) jeweils zwei um die Längsachse (L) zueinander versetzt angeordnete pneumatische Messdüsen (31-38, 31'-34', 31"-34") vorgesehen sind.

7. Vorrichtung nach einem der vorstehenden Ansprüche,
**dadurch gekennzeichnet, dass**
wenigstens ein Paar, vorzugsweise zwei um die Längsachse (L) zueinander versetzt angeordnete Paare, von einander gegenüberliegenden pneumatischen Messdüsen (31-38) vorgesehen sind.

8. Vorrichtung nach einem der vorstehenden Ansprüche,
**dadurch gekennzeichnet, dass** die Mittel zum Detektieren einer Neigungsänderung wenigstens eine Anordnung aus einer in die Ausnehmung (17, 17') mündenden pneumatischen Messdüse (31'-34') und einem von einer Innenwand (42) der Aufnahme (17) vorspringenden Abstützelement (43, 51) umfassen.

9. Vorrichtung nach zumindest einem der vorstehenden Ansprüche,
**dadurch gekennzeichnet, dass**
einerseits in wenigstens zwei bezüglich einer Längsachse (L) des Tastkörpers (15) voneinander beabstandeten Messebenen (M1, M2) wenigstens eine in eine Ausnehmung (17, 17') des Tastkopfes (13, 13', 13") mündende pneumatische Messdüse (31'-34', 31"-34") vorgesehen ist und
andererseits zwischen den beiden Messebenen (M1, M2) ein von einer Innenwand (42) der Ausnehmung (17, 17') vorspringendes Abstützelement (43, 51) vorgesehen ist.

10. Vorrichtung nach einem der vorstehenden Ansprüche,
**dadurch gekennzeichnet, dass**
jeder Messdüse (31-39, 31'-35', 31"-35") eine steuerbare Druckluftzufuhr zugeordnet ist.

11. Vorrichtung nach einem der vorstehenden Ansprüche,
**dadurch gekennzeichnet, dass**
jeder Messdüse (31-39, 31'-35', 31"-35") ein pneumatisch-elektrischer Wandler zugeordnet ist, welcher in Abhängigkeit von einem Luftdruck der Messdüse ein von der Position des Tastkörpers (15) in der Ausnehmung (17, 17') abhängiges Messsignal erzeugt.

12. Vorrichtung nach Anspruch 11,
**dadurch gekennzeichnet, dass**
eine elektronische Auswerteeinheit vorgesehen ist, welche anhand der erzeugten Messsignale die Position, insbesondere Neigung, des Tastkörpers (15) relativ zu dem Tastkopf (13, 13', 13"), insbesondere kontinuierlich, ermittelt.

13. Vorrichtung nach zumindest einem der vorstehenden Ansprüche,
**dadurch gekennzeichnet, dass**
der Tastkörper (15) während des Betriebs der Vermessungsvorrichtung auf einem Luftstrom schwebend in einer Aufnahme (17) des Tastkopfs (13, 13') gelagert ist.

14. Vorrichtung nach Anspruch 13,
**dadurch gekennzeichnet, dass**
zur schwebenden Lagerung des Tastkörpers (15) mindestens eine nach oben gerichtete Luftaustrittsdüse (39, 35') in der Aufnahme (17) vorgesehen ist, wobei die Luftaustrittsdüse (39, 35') bevorzugt als pneumatische Messdüse ausgebildet ist, welche dazu ausgebildet ist, die Höhe des schwebend gelagerten Tastkörpers (15) in der Aufnahme (17) zu ermitteln.

## Claims

1. An apparatus for measuring objects, in particular a coordinate measuring unit, having an actuator and a probe (13, 13', 13") which is movable relative to an object (11) to be measured by means of the actuator to sample the surface of the object (11) in a contacting manner,
wherein a sampling body (15) which is in particular elongate and whose front end (21) is designed as a measuring tip (25) for a contact with the object (11) is supported at the probe (13, 13', 13") and means are provided to determine the relative position of the measuring tip (25) with respect to the probe (13, 13', 13"); wherein the sampling body (15) is supported at the probe (13, 13', 13") with changeable inclination; and wherein
means (31 - 39, 31' - 35', 31" - 35") are provided by which a change in the inclination of the sampling body (15) relative to the probe (13, 13', 13"), or vice versa, can be detected via a measurement of a test parameter,
**characterized in that**
the means for detecting a change in inclination include at least one pneumatic measuring nozzle (31 - 39, 31' - 35', 31" - 35") which opens into a cut-out (17, 17') of the probe (13, 13', 13").

2. An apparatus in accordance with claim 1,
**characterized in that**
the test parameter is a spacing of the sampling body (15) from a reference point.

3. An apparatus in accordance with claim 1 or claim 2,
**characterized in that**
the sampling body (15) is supported in a mount (17) of the probe (13, 13').

4. An apparatus in accordance with at least one of the preceding claims,
**characterized in that**
measuring apparatus are provided in the probe (13, 13', 13") which are designed to detect, in particular continuously, the position of the sampling body (15) in at least one measurement plane, preferably two different measurement planes (M 1, M2) extending transversely to a longitudinal axis (L) of the sampling body (15).

5. An apparatus in accordance with at least one of the preceding claims,
**characterized in that**
the sampling body (15) has a cylindrical, or preferably parallelepiped-shaped, bearing section (20) which is received with movement play in a cut-out (17, 17') of the probe (13, 13', 13") in particular open at one side, with the sampling body (15) in particular being inserted into the cut-out (17, 17') from above.

6. An apparatus in accordance with any one of the preceding claims, **characterized in that**
a respective two pneumatic measuring nozzles (31 - 38, 31'-34', 31" - 34") arranged offset from one another about the longitudinal axis (L) are provided in at least one measurement plane, preferably two measurement planes (M1, M2) spaced apart from one another and extending transversely to a longitudinal axis (L) of the sampling body (15).

7. An apparatus in accordance with any one of the preceding claims,
**characterized in that**
at least one pair of mutually opposite pneumatic measuring nozzles (31 - 38), preferably two pairs arranged offset from one another about the longitudinal axis (L), are provided.

8. An apparatus in accordance with any one of the preceding claims,
**characterized in that**
the means for detecting a change in inclination include at least one arrangement of a pneumatic measuring nozzle (31' - 34') opening into the cut-out (17, 17') and of a support element (43, 51) projecting from an inner wall (42) of the mount (17).

9. An apparatus in accordance with at least one of the preceding claims,
**characterized in that**
at least one pneumatic measuring nozzle (31' - 34', 31" - 34") opening into a cut-out (17, 17') of the probe (13, 13', 13") is provided in at least two measurement planes (M 1, M2) spaced apart from one another with respect to a longitudinal axis (L) of the sampling body (15), on the one hand, and
a support element (43, 51) projecting from an inner wall (42) of the cut-out (17, 17') is provided between the two measurement planes (M1, M2), on the other hand.

10. An apparatus in accordance with any one of the preceding claims,
**characterized in that**
a controllable compressed air supply is associated with each measuring nozzle (31 - 39, 31' - 35', 31" - 35").

11. An apparatus in accordance with any one of the preceding claims,
**characterized in that**
a pneumo-electric converter which generates a measured signal dependent on the position of the sampling body (15) in the cut-out (17, 17') in dependence on an air pressure of the measuring nozzle is associated with each measuring nozzle (31 - 39, 31' - 35', 31" - 35").

12. An apparatus in accordance with claim 11,
**characterized in that**
an electronic evaluation unit is provided which determines, in particular continuously, the position, in particular inclination, of the sampling body (15) relative to the probe (13, 13', 13") with reference to the generated measured signals.

13. An apparatus in accordance with at least one of the preceding claims,
**characterized in that**
the sampling body (15) is supported in a floating manner on a flow of air in a mount (17) of the probe (13, 13') during the operation of the measurement apparatus.

14. An apparatus in accordance with claim 13,
**characterized in that**
at least one upwardly directed air outlet nozzle (39, 35') is provided in the mount (17) for the floating support of the sampling body (15), wherein the air outlet nozzle (39, 35') is preferably designed as a pneumatic measuring nozzle which is designed to determine the height of the sampling body (15) supported in a floating manner in the mount (17).

## Revendications

1. Dispositif pour mesurer des objets, en particulier appareil de mesure de coordonnées, comportant un actionneur et une tête de palpage (13, 13', 13") qui est déplaçable par rapport à un objet à mesurer au moyen de l'actionneur, afin de palper la surface de l'objet en la touchant,
dans lequel un corps de palpage (15) en particulier oblong dont l'extrémité avant (21) est réalisée sous la forme d'une pointe de mesure (25) pour un contact avec l'objet (11), est monté sur la tête de palpage (13, 13', 13"), et dans lequel sont prévus des moyens pour détecter la position relative de la pointe de mesure (25) par rapport à la tête de palpage (13, 13', 13"),
dans lequel le corps de palpage (15) est monté avec une inclinaison variable sur la tête de palpage (13, 13', 13") et
dans lequel sont prévus des moyens (31 - 39, 31' - 35', 31" - 35") par lesquels une modification de l'inclinaison du corps de palpage (15) par rapport à la tête de palpage (13, 13', 13") ou inversement peut être détectée par mesurage d'un paramètre de contrôle,
**caractérisé en ce que**
les moyens pour détecter une modification de l'inclinaison comprennent au moins une buse de mesure pneumatique (31 - 39, 31' - 35', 31" - 35") qui débouche dans un évidement (17, 17') de la tête de palpage (13, 13', 13").

2. Dispositif selon la revendication 1,
**caractérisé en ce que** le paramètre de contrôle est une distance du corps de palpage (15) par rapport à un point de référence.

3. Dispositif selon la revendication 1 ou 2,
**caractérisé en ce que**
le corps de palpage (15) est monté dans un logement (17) de la tête de palpage (13, 13').

4. Dispositif selon l'une au moins des revendications précédentes,
**caractérisé en ce que**
des moyens de mesure sont prévus dans la tête de palpage (13, 13', 13"), qui sont réalisés pour détecter en particulier en continu la position du corps de palpage (15) dans au moins un, de préférence dans deux plans de mesure (M1, M2) différents qui s'étendent transversalement à un axe longitudinal (L) du corps de palpage (15).

5. Dispositif selon l'une au moins des revendications précédentes,
**caractérisé en ce que**
le corps de palpage (15) comprend une portion de montage (20) de forme cylindrique ou de préférence parallélépipédique, qui est reçue avec une marge de mouvement dans un évidement (17, 17') en particulier ouvert sur un côté de la tête de palpage (13, 13', 13"), le corps de palpage (15) étant mis en place dans l'évidement (17, 17') en particulier depuis le dessus.

6. Dispositif selon l'une au moins des revendications précédentes,
**caractérisé en ce que**
dans un, de préférence dans deux plans de mesure (M1, M2) écartés l'un de l'autre et s'étendant transversalement à un axe longitudinal (L) du corps de palpage (15), il est prévu deux buses de mesure pneumatiques respectives (31 - 38, 31' - 34', 31" - 34") décalées l'une de l'autre autour de l'axe longitudinal (L).

7. Dispositif selon l'une au moins des revendications précédentes,
**caractérisé en ce que**
il est prévu au moins une paire, de préférence deux paires de buses de mesure pneumatiques (31 - 38) opposées l'une à l'autre, qui sont agencées en décalage l'une de l'autre autour de l'axe longitudinal (L).

8. Dispositif selon l'une au moins des revendications précédentes,
**caractérisé en ce que**
les moyens pour détecter une modification de l'inclinaison comprennent au moins un agencement constitué d'une buse de mesure pneumatique (31' - 34') débouchant dans l'évidement (17, 17') et d'un élément de support (43, 51) qui fait saillie d'une paroi intérieure (42) du logement (17).

9. Dispositif selon l'une au moins des revendications précédentes,
**caractérisé en ce que**
il est prévu d'une part au moins une buse de mesure pneumatique (31' - 34', 31" - 34"), débouchant dans un évidement (17, 17') de la tête de palpage (13, 13', 13"), dans au moins deux plans de mesure (M1, M2) écartés l'un de l'autre par rapport à un axe longitudinal (L) du corps de palpage (15), et
il est prévu d'autre part un élément de support (43, 51) entre les deux plans de mesure (M1, M2), qui fait saillie d'une paroi intérieure (42) de l'évidement (17, 17').

10. Dispositif selon l'une au moins des revendications précédentes,
**caractérisé en ce que**
une alimentation pilotable en air comprimé est associée à chaque buse de mesure (31 - 39, 31' - 35', 31" - 35").

11. Dispositif selon l'une au moins des revendications précédentes,
**caractérisé en ce que**
à chaque buse de mesure (31 - 39, 31' - 35', 31" - 35") est associé un convertisseur pneumatique-électrique qui, en fonction d'une pression d'air de la buse de mesure, génère un signal de mesure qui dépend de la position du corps de palpage (15) dans l'évidement (17, 17').

12. Dispositif selon la revendication 11,
**caractérisé en ce que**
il est prévu une unité d'évaluation électronique qui, en se basant sur les signaux de mesure générés, détecte en particulier en continu la position, en particulier l'inclinaison du corps de palpage (15) par rapport à la tête de palpage (13, 13', 13").

13. Dispositif selon l'une au moins des revendications précédentes,
**caractérisé en ce que**
pendant le fonctionnement du dispositif de mesure, le corps de palpage (15) est monté dans un logement (17) de la tête de palpage (13, 13') en flottant sur un flux d'air.

14. Dispositif selon la revendication 13,
**caractérisé en ce que**
pour le montage flottant du corps de palpage (15), il est prévu au moins une buse de sortie d'air (39, 35') dirigée vers le haut dans le logement (17), la buse de sortie d'air (39, 35') étant réalisée de préférence sous la forme d'une buse de mesure pneumatique qui est conçue pour détecter la hauteur du corps de palpage (15) monté flottant dans le logement (17).
